(19) **Europäisches Patentamt / European Patent Office / Office européen des brevets**

(11) **EP 3 761 133 A1**

(12) **EUROPEAN PATENT APPLICATION**
published in accordance with Art. 153(4) EPC

(43) Date of publication:
**06.01.2021 Bulletin 2021/01**

(21) Application number: **18907849.6**

(22) Date of filing: **05.12.2018**

(51) Int Cl.:
**G05B 23/02** *(2006.01)*

(86) International application number:
**PCT/JP2018/044793**

(87) International publication number:
**WO 2019/167375 (06.09.2019 Gazette 2019/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.03.2018 JP 2018037007**

(71) Applicant: **Hitachi, Ltd.**
**Tokyo 100-8280 (JP)**

(72) Inventors:
• **SEKIAI, Takaaki**
**Tokyo 100-8280 (JP)**
• **TANNO, Mitsuhiro**
**Tokyo 100-8280 (JP)**
• **KUROHA, Yoshiyuki**
**Tokyo 100-8280 (JP)**

(74) Representative: **MERH-IP Matias Erny Reichl Hoffmann**
**Patentanwälte PartG mbB**
**Paul-Heyse-Strasse 29**
**80336 München (DE)**

(54) **DIAGNOSIS DEVICE AND DIAGNOSIS METHOD**

(57)     Provided is a diagnosis apparatus for diagnosing an abnormality in a facility based on operation data of the facility, and the diagnosis apparatus includes: a clustering unit configured to determine whether the operation data of the facility can be classified into an existing cluster, and when it is determined that the operation data cannot be classified, add a cluster with an abnormal attribute to the existing cluster; a diagnosis unit configured to diagnose an abnormality in the facility based on a processing result of the clustering unit; and a cluster attribute setting unit configured to set an attribute of the existing cluster based on the operation data of the facility in a predetermined period.

[FIG. 1]

**Description**

Technical Field

The present invention relates to a diagnosis apparatus and a diagnosis method, and is suitable for application in a diagnosis apparatus and a diagnosis method for diagnosing an abnormality in a facility by using, for example, operation data of the facility.

Background Art

In recent years, with the technology innovation of information and communication technology (ICT) and internet of thing (IoT), an environment, in which a high-speed computer, network communication, and a large-capacity data storage device can be used, is getting ready. While attention is paid to utilization of data accumulated in a large amount in many industrial fields, for example, in a field of power generation business, it is required to make a more efficient management policy by integration of systems that manage data collected at local sites such as power plant measurement data and inspection and maintenance data, and enterprise management and asset information.

In the field of power generation business, importance of a thermal power plant as a backup power supply is increasing due to a concern that a fluctuation in power generation amount accompanying an increase in using renewable energy such as wind power generation and solar power generation lowers stability of a power system. Therefore, the thermal power plant is required to operate in consideration of key performance indicators (KPI) such as operation rate, environmental performance, and efficiency.

In order to improve the KPI of the thermal power plant, a number of apparatuses for detecting an abnormality sign before an abnormal condition occurs in a diagnosis target and methods thereof have been discussed. For example, a diagnosis apparatus using an adaptive resonance theory (ART) has been disclosed (see PTL 1). Here, the ART is a theory of classifying multidimensional time series data into clusters according to a similarity degree thereof.

In a technique described in PTL 1, first, normal operation data is classified into a plurality of clusters (normal clusters) by using the ART. Next, current operation data is input to the ART and is classified into clusters. When the operation data cannot be classified into the normal clusters, a new cluster is generated. The generation of the new cluster means that a state of the diagnosis target is changed into a new state. Therefore, in the diagnosis apparatus described in PTL 1, the occurrence of an abnormality sign is determined by the generation of the new cluster. In addition, PTL 1 discloses a technique of performing abnormality diagnosis and cause estimation by using cluster numbers and the number of the occurrences of the clusters.

For example, as a diagnosis method used when a state change of an external environment is large, a technique of constructing normal clusters by setting operation data acquired in the most recent predetermined period as learning data has been disclosed (see PTL 2). In the diagnosis apparatus described in PTL 2, the occurrence of the abnormality sign is detected when a distance from a target data to a normal cluster exceeds a predetermined value.

Citation List

Patent Literature

PTL 1: JP-A-2010-237893
PTL 2: JP-A-2015-018389

Summary of Invention

Technical Problem

Since normal data and abnormal data tend to change together when characteristics of the plant change due to aging, periodic inspection, and the like, there is a possibility that data belonging to a cluster learned as normal in the past may be abnormal at present. In such a case, in the technique described in PTL 1, the occurrence of the abnormality cannot be detected, and misinformation occurs. In addition, in the technique described in PTL 2, there is a problem that labor and time are necessary for processing learning data and generating a normal cluster each time a diagnosis is performed.

The invention has been achieved in consideration of the above facts, and an object of the invention is to propose a diagnosis apparatus and a diagnosis method that can prevent an occurrence of misinformation without processing learning data and generating a normal cluster each time a diagnosis is performed.

Solution to Problem

In order to solve such a problem, the invention provides a diagnosis apparatus configured to diagnose an abnormality in a facility based on operation data of the facility, and the diagnosis apparatus includes: a clustering unit configured to determine whether the operation data of the facility can be classified into an existing cluster, and when it is determined that the operation data cannot be classified, add a cluster with an abnormal attribute to the existing cluster; a diagnosis unit configured to diagnose an abnormality in the facility based on a processing result of the clustering unit; and a cluster attribute setting unit configured to set an attribute of the existing cluster based on the operation data of the facility in a predetermined period.

The invention also provides a diagnosis method for diagnosing an abnormality in a facility based on operation data of the facility, and the diagnosis method includes: a first step of determining, by a clustering unit, whether the operation data of the facility can be classified into an existing cluster, and when it is determined that the operation data cannot be classified, adding a cluster with an abnormal attribute to the existing cluster; a second step of diagnosing, by a diagnosis unit, an abnormality in the facility based on a processing result of the clustering unit; and a third step of setting, by a cluster attribute setting unit, an attribute of the existing cluster based on the operation data of the facility in a predetermined period.

According to the above configurations, since the attribute of the existing cluster is set based on the operation data of the facility in the predetermined period, an occurrence of misinformation can be prevented without the need of processing learning data and generating a normal cluster each time a diagnosis is performed.

Advantageous Effect

According to the invention, the abnormality in the facility can be diagnosed quickly and appropriately.

Brief Description of Drawings

[FIG. 1] FIG. 1 is a diagram showing an example related to a configuration of a diagnosis system according to a first embodiment.
[FIG. 2] FIG. 2 shows diagrams showing examples of data stored in a database (DB) according to the first embodiment.
[FIG. 3] FIG. 3 is a diagram showing an example of a processing procedure related to a diagnosis processing according to the first embodiment.
[FIG. 4] FIG. 4 shows diagrams showing an example related to a configuration of a clustering unit according to the first embodiment.
[FIG. 5] FIG. 5 shows diagrams showing an example of a data classification result and an abnormality degree calculation method according to the first embodiment.
[FIG. 6] FIG. 6 is a diagram showing an example of a processing procedure related to an attribute automatic change processing according to the first embodiment.
[FIG. 7] FIG. 7 is a diagram showing an example of a processing content performed by a cluster attribute setting unit according to the first embodiment.
[FIG. 8] FIG. 8 is a diagram showing an example of a processing procedure related to an attribute change post-processing according to the first embodiment.
[FIG. 9] FIG. 9 shows diagrams showing an example of a result of adjusting a weight coefficient of a cluster according to the first embodiment.
[FIG. 10] FIG. 10 is a diagram showing an example of a result of recalculating an abnormality degree according to the first embodiment.

Description of Embodiments

Hereinafter, one embodiment of the invention will be described in detail with reference to the drawings.

(1) First Embodiment

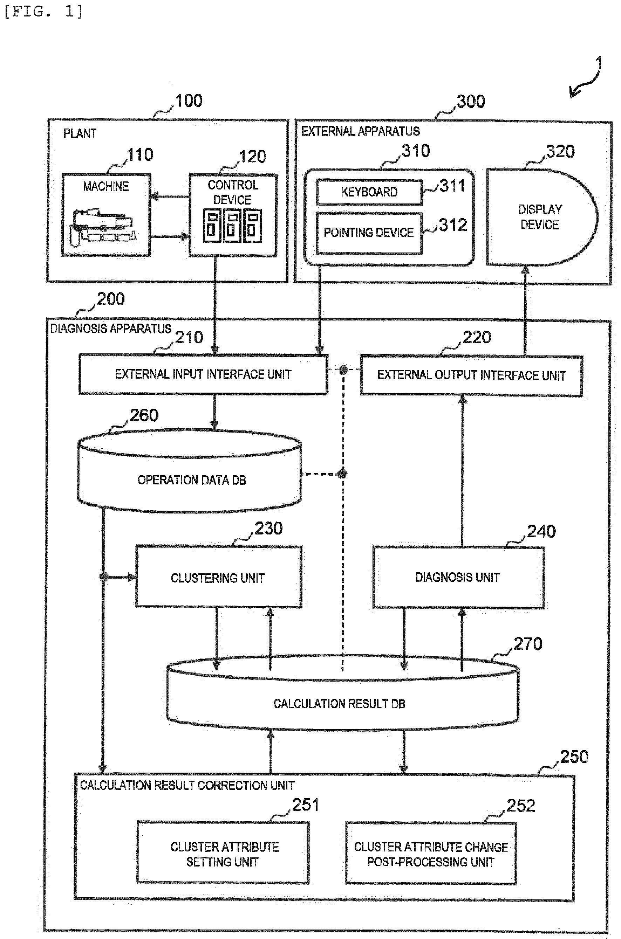

In FIG. 1, 1 denotes a diagnosis system according to a first embodiment as a whole. In the diagnosis system 1, an occurrence of misinformation is prevented by automatically changing an attribute of a cluster appropriately. In the diagnosis system 1, it is not necessary to process learning data and generate a normal cluster each time a diagnosis is performed by changing a setting of an attribute of an existing cluster. Hereinafter, such a configuration will be described by giving examples appropriately.

The diagnosis system 1 includes a plant 100, a diagnosis apparatus 200 configured to diagnose an operation condition of the plant 100 (for example, an abnormality (abnormality sign) in the plant 100), and an external apparatus 300 for referring to and updating various kinds of information stored in the diagnosis apparatus 200. The diagnosis apparatus 200 is communicably connected to the plant 100 and the external apparatus 300.

The plant 100 includes a machine 110 constituting the plant 100 and a control device 120 for controlling the machine 110. The control device 120 receives a measurement signal transmitted from the machine 110 and transmits a control signal.

The diagnosis apparatus 200 diagnoses the abnormality in the plant 100 based on the operation data of the plant 100. The diagnosis apparatus 200 is a computer such as a server apparatus or a tablet terminal, and includes a central processing unit (CPU), a random access memory (RAM), a read only memory (ROM), a hard disk drive (HDD), a communication unit, and the like, which are not shown.

Functions of the diagnosis apparatus 200 (an external input interface unit 210, an external output interface unit 220, a clustering unit 230, a diagnosis unit 240, a calculation result correction unit 250, and the like) may be implemented by, for example, a CPU reading a program stored in a ROM into a RAM and executing the program (software), may be implemented by hardware such as a dedicated circuit, or may be implemented by combining the software and the hardware. A part of the functions of the diagnosis apparatus 200 may be implemented by another computer communicable with the diagnosis apparatus 200. The communication unit includes, for example, a network interface card (NIC), and performs protocol control during communication with the external apparatus 300.

The diagnosis apparatus 200 includes an operation data DB 260 and a calculation result DB 270 as DBs. In the DBs, digitized information is stored, and the information is stored in a form called an electronic file (electronic data).

The external input interface unit 210 input, into the diagnosis apparatus 200, the operation data collected by the plant 100 and an external input signal created by an operation of an external input device 310 (a keyboard 311 and a pointing device 312) included in the external apparatus 300. For example, the operation data input into the diagnosis apparatus 200 is stored in the operation data DB 260.

The external output interface unit 220 outputs (transmits, prints, displays, etc.) the operation data stored in the operation data DB 260 and a calculation result stored in the calculation result DB 270.

The clustering unit 230 determines whether the operation data of the plant 100 can be classified into an existing cluster, and when it is determined that the operation data cannot be classified, adds a cluster with an abnormal attribute (abnormal cluster) to the existing cluster.

More specifically, the clustering unit 230 is equipped with a technique (clustering technique) using an adaptive resonance theory, and classifies the operation data stored in the operation data DB 260 into clusters according to a similarity degree thereof.

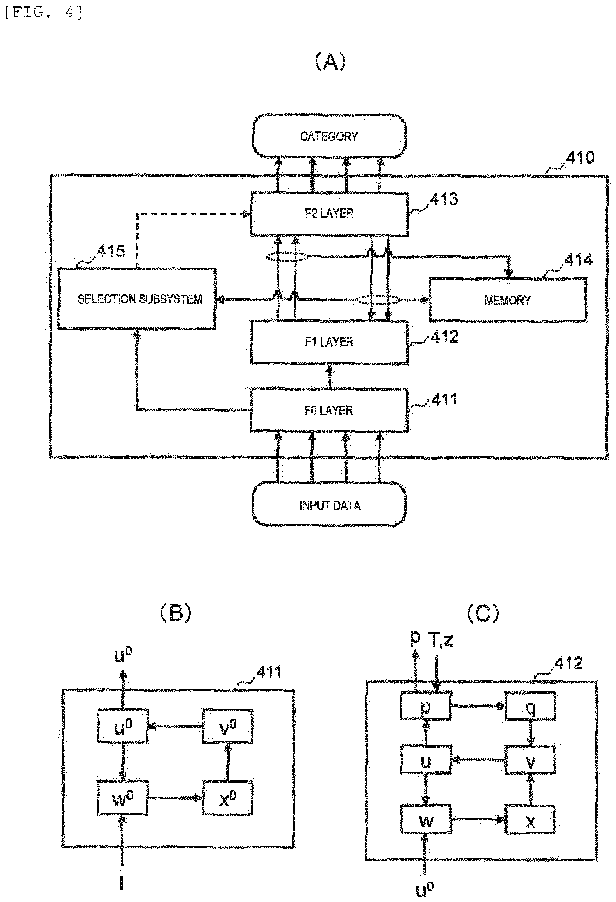

For example, the clustering unit 230 first classifies normal operation data and generates a plurality of clusters, and sets attributes of the generated plurality of clusters to be normal (define as normal clusters). The clustering unit 230 generates a new cluster by the clustering technique when it is determined that a result of classifying the current operation data into the clusters does not belong to the normal clusters. The clustering unit 230 stores a clustering result into the calculation result DB 270. The clustering unit 230 will be described later with reference to FIG. 4. However, for the adaptive resonance theory, one disclosed in a publicly known literature such as PTL 1 may be used. In addition, the clustering unit 230 is not limited to the configuration described in the present embodiment, and other clustering techniques may be equipped.

The diagnosis unit 240 diagnoses an abnormality in the plant 100 based on the processing result (clustering result) of the clustering unit 230. The generation of the new cluster by the clustering unit 230 means that the state of the diagnosis target is changed into a new state. Therefore, the diagnosis unit 240 can determine, for example, the occurrence of the abnormality according to the generation of the new cluster. Then, the diagnosis unit 240 calculates, as an abnormality degree, a distance from target data to a closest normal cluster.

A diagnosis result of the diagnosis unit 240 is transmitted to a display device 320 via, for example, the external output interface unit 220, and the diagnosis result is notified to an operator.

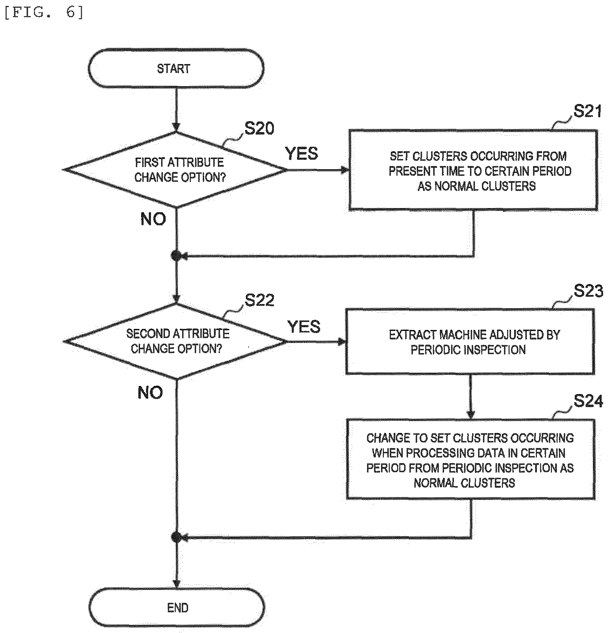

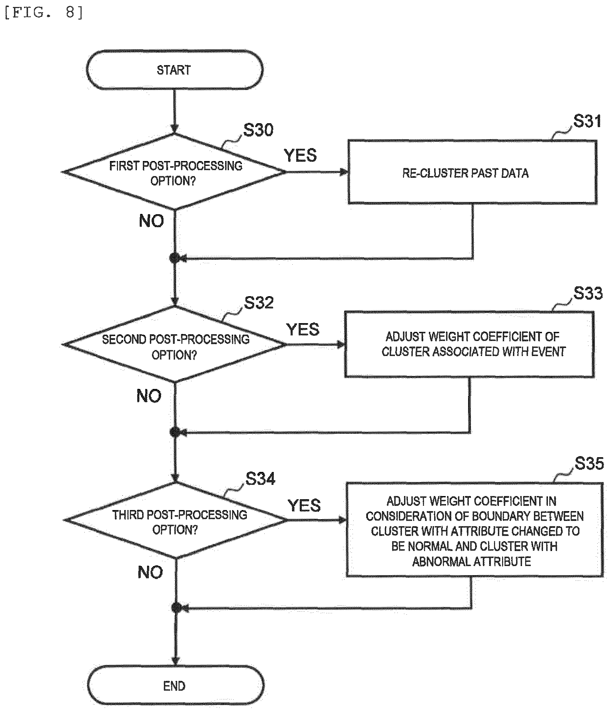

The calculation result correction unit 250 includes a cluster attribute setting unit 251 and a cluster attribute change post-processing unit 252, and sets the attributes of the existing clusters stored in the calculation result DB 270 or corrects the calculation result of the abnormality degree based on the operation data of the plant 100 in a predetermined period. For example, for the existing clusters, the cluster attribute setting unit 251 sets as normal attributes of clusters into which the operation data of the plant 100 is classified in the predetermined period, and sets as abnormal the attribute of the cluster other than the clusters set as normal. The processing of the cluster attribute setting unit 251 will be described later with reference to FIG. 6. For example, when the attributes of the existing clusters are changed by the cluster attribute setting unit 251, the cluster attribute change post-processing unit 252 recalculates the abnormality degree that is the distance between the operation data and the normal cluster for past operation data. The processing of the cluster attribute change post-processing unit 252 will be described later with reference to FIG. 8.

Although an example in which the functions and the DBs of the diagnosis apparatus 200 are provided inside the diagnosis apparatus 200 is illustrated for the diagnosis apparatus 200, a part of the functions and the DBs may be arranged outside the diagnosis apparatus 200, and only data may be communicated between the apparatuses. All pieces of information among DB information, which is a signal (data) stored in each DB, can be displayed on the display device 320 via the external output interface unit 220, and the pieces of information can be corrected based on an external input signal generated by operating the external input device 310.

Although the external input device 310 includes the keyboard 311 and the pointing device 312 in the present embodiment, a device for inputting data, such as a microphone for voice input or a touch panel, can be adopted appropriately. Although the external apparatus 300 can be implemented by a computer such as a notebook computer or a tablet terminal, the external apparatus 300 is not limited to a computer. For example, the external input device 310 and the display device 320 may be provided as separate devices. Other devices such as a printing device and a projector device may be provided in the diagnosis system 1 in addition to or in place of the display device 320.

It is needless to say that in the diagnosis system 1, the diagnosis apparatus 200 can be implemented as an apparatus for analyzing the operation data offline. It is needless to say that in the diagnosis system 1, although an application target of the diagnosis apparatus 200 is the plant 100, the application target is not limited, and the invention can be applied to various facilities.

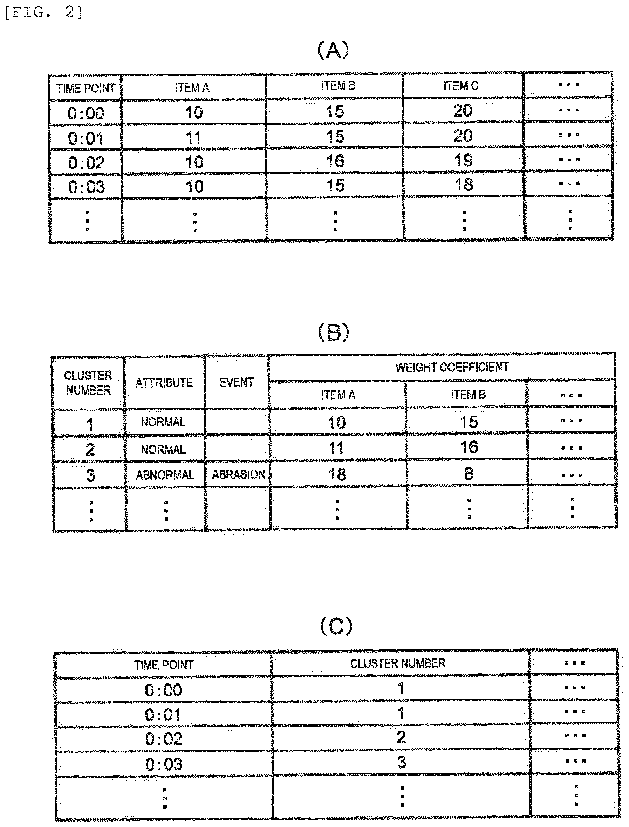

FIG. 2 shows diagrams showing examples of data stored in the DBs provided in the diagnosis apparatus 200.

FIG. 2 (A) shows an example of data stored in the operation data DB 260. In a table shown in FIG. 2(A), each measurement value (operation data) measured by each sensor (sensor A, sensor B, sensor C⋯) provided in the plant 100 is stored in each item (item A, item B, item C⋯) for each sampling period.

FIG. 2(B) and FIG.2(C) show examples of data stored in the calculation result DB 270, which is data obtained by operating the clustering unit 230 and the like. In the table of FIG. 2(B), data about the attribute of each cluster and the weight coefficient for each cluster is stored. In the table of FIG. 2(C), an operation data classification result (data indicating a relationship between operation data, time point, cluster number, and the like) is stored.

Here, the attribute is information for defining (identifying) whether each cluster is a normal cluster or an abnormal cluster. The weight coefficient is coefficient information for defining a center coordinate of each cluster. Further, for the abnormal cluster, an automatically or manually defined event is stored for each cluster.

Here, when the operation data is divided into a plurality of groups, the table shown in FIG. 2(B) and the table shown in FIG. 2(C) are provided for each group. More specifically, when operation data including a plurality of pieces of data (for example, first data to sixth data) in a plurality of sensors is divided into a plurality of groups for each machine (for example, when the first data and the second data (data of a first group) are input into a first machine, output data from the first machine, third data, and fourth data (data of a second group) are input into a second machine provided downstream of the first machine, and fifth data and sixth data (data of a third group) are input into a third machine provided in parallel with the first machine), the clustering unit 230 may be configured to generate a cluster for each group.

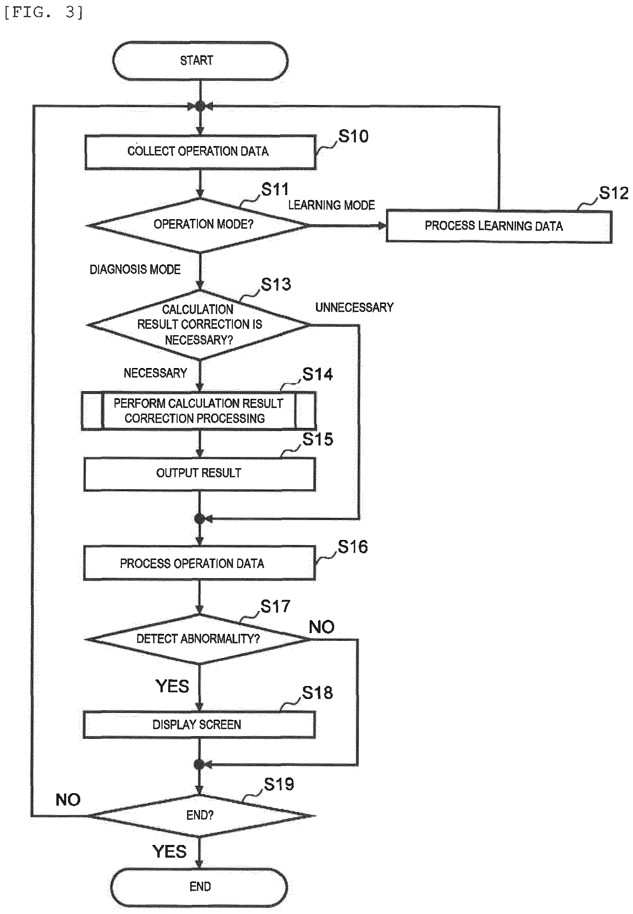

FIG. 3 is a diagram showing an example of a processing procedure related to a diagnosis processing performed by the diagnosis apparatus 200.

In step S10, the external input interface unit 210 inputs (collects) the operation data from the control device 120 and stores the operation data into the operation data DB 260.

In step S11, the diagnosis unit 240 determines whether an operation mode is a learning mode or a diagnosis mode. When the diagnosis unit 240 determines that the operation mode is the learning mode, the processing proceeds to step S12, and when the diagnosis unit 240 determines that the operation mode is the diagnosis mode, the processing proceeds to step S13. In the present embodiment, the learning mode is operated when the flowchart is repeated for the first time, and the processing is performed such that the diagnosis mode operates at and after the second time.

In step S12, the clustering unit 230 processes the learning data and generates a cluster in a normal state, and the processing proceeds to step S10.

In step S13, the diagnosis unit 240 determines whether a calculation result correction is necessary (whether it is a predetermined timing). When the diagnosis unit 240 determines that the calculation result correction is necessary, the processing proceeds to step S14, and when the diagnosis unit 240 determines that the calculation result correction is unnecessary, the processing proceeds to step S16.

Here, as the predetermined timing for correcting the calculation result, it is possible to set any timing such as a timing at which characteristics of the plant 100 change after a periodic inspection, a timing at which a predetermined period passes after a previous calculation result is corrected, or a timing at which a signal for executing the calculation result correction is input by the operator.

In step S14, a calculation result correction processing is performed. Details of the calculation result correction processing will be described later with reference to FIG. 6, FIG. 8, and the like. In the calculation result correction processing, an attribute automatic change processing and an attribute change post-processing are executed to perform a cluster attribute correction, a calculation result correction for the abnormality degree, and a weight coefficient correction.

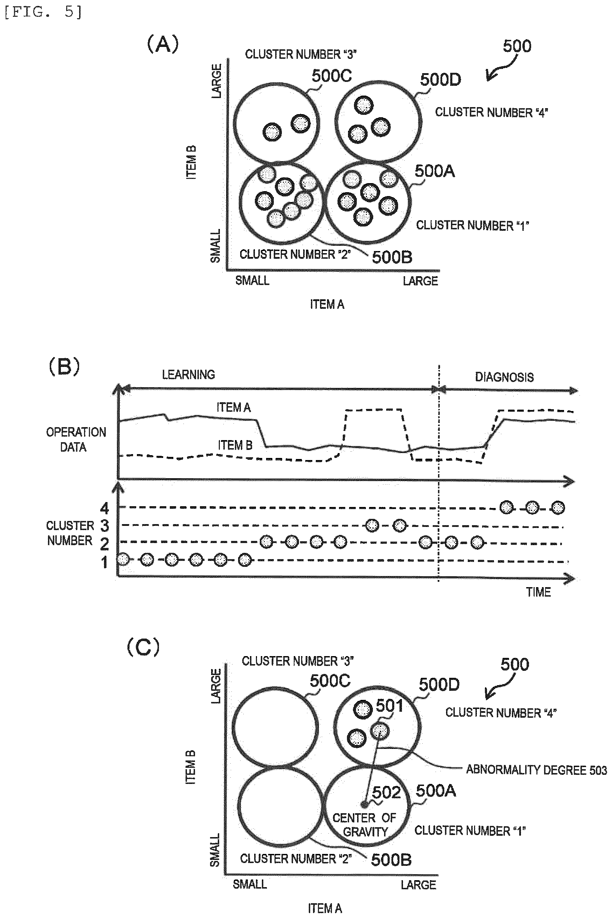

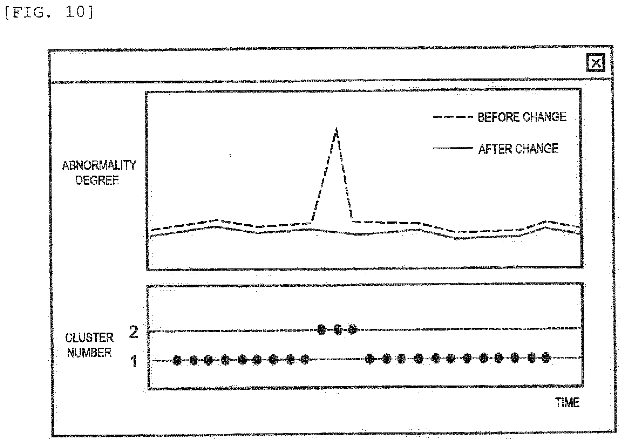

In step S15, the external output interface unit 220 outputs a result of the calculation result correction processing. For example, the external output interface unit 220 transmits screen information related to a screen for confirming an attribute change result of the cluster by the cluster attribute setting unit 251 (for example, screen information including part or all information of the table shown in FIG. 5(B)) to the external apparatus 300. For another example, the external output interface unit 220 transmits screen information related to a screen for confirming a processing result of the cluster attribute change post-processing unit 252 (for example, screen information including part or all information of the table shown in FIG. 5(B), and screen information showing the abnormality degree shown in FIG. 10) to the external apparatus 300.

A trigger for outputting the result of the calculation result correction processing may be a request from the external apparatus 300, may be a periodic processing such as a monthly processing, or may be another trigger.

In step S16, the clustering unit 230 processes the operation data. More specifically, the clustering unit 230 classifies the operation data into clusters. When the clustering unit 230 determines that a result of classifying the operation data into the clusters does not belong to the existing clusters, the clustering unit 230 generates a new cluster by the clustering technique. The clustering unit 230 stores, as the clustering result, information (cluster number, attribute, event, weight coefficient, etc.) of the new cluster, the result of recalculating the weight coefficient, and the operation data classification result (time point, cluster number, abnormality degree, and the like) into the calculation result DB 270.

In step S17, the diagnosis unit 240 determines whether an abnormality occurs in the plant 100 (whether the attribute of the classified cluster is abnormal). When the diagnosis unit 240 determines that an abnormality has occurred, the processing proceeds to step S17, and when the diagnosis unit 240 determines that an abnormality does not occur, the processing proceeds to step S18.

In step S18, the external output interface unit 220 generates screen information including information indicating that an abnormality is detected, such as "abnormality is detected." and transmits the screen information to the display device 320 (screen display).

In the present embodiment, although an example in which information related to the clustering result is output when an abnormality occurs is shown, the invention is not limited thereto, and information related to the clustering result may be output regardless of the occurrence of the abnormality.

In step S19, the diagnosis unit 240 determines whether there is a stop instruction from the operator. When it is determined that there is a stop instruction, the diagnosis unit 240 ends the diagnosis processing, and when it is determined that there is no instruction, the processing proceeds to step S10.

FIG. 4 shows diagrams showing an example of a configuration when the adaptive resonance theory (ART) is used, as an example of the clustering unit 230.

In the ART, data including data $Nxi(n)$, normalized to a range of "0" to "1" based on a normalized range in which the operation data and raw material information data are set, and a complement $CNxi(n)(= 1-Nxi(n))$ of the normalized data is input as input data $Ii(n)$.

An ART module 410 includes an F0 layer 411, an F1 layer 412, an F2 layer 413, a memory 414, and a selection subsystem 415, which are coupled to one another. The F1 layer 412 and the F2 layer 413 are coupled via a weight coefficient.

The weight coefficient represents a prototype of a cluster into which the input data is classified. Here, the prototype represents a representative value of the cluster.

Next, an algorithm of the ART module 410 will be described.

An outline of the algorithm when the input data is input to the ART module 410 is as the following (processing 1) to (processing 5).

(Processing 1)

An input vector is normalized and noise is removed by the F0 layer 411.

(Processing 2)

A suitable cluster candidate is selected by comparing the input data input to the F1 layer 412 with the weight coefficient.

(Processing 3)

Validity of the cluster selected by the selection subsystem 415 is evaluated by a ratio of the cluster to a parameter $\rho$. When it is determined that the cluster is valid, the input data is classified into the cluster, and the processing proceeds to the (processing 4). On the other hand, when it is determined that the cluster is not valid, the cluster is reset, and a candidate of the suitable cluster is selected from other clusters (repeating the (processing 2)). When the value of the parameter $\rho$ is increased, the classification of the clusters becomes finer. That is, a cluster size is reduced. Conversely, when the value of $\rho$ is decreased, the classification becomes coarser. The cluster size is increased. The parameter $\rho$ is referred to as a vigilance parameter.

(Processing 4)

In the (processing 2), when all the existing clusters are reset, it is determined that the input data belongs to a new cluster and a new weight coefficient that represents a prototype of the new cluster is generated.

(Processing 5)

When the input data is classified into a cluster J, a weight coefficient WJ (new) corresponding to the cluster J is updated according to the following equation (1) using a past weight coefficient WJ (old) and input data p (or data derived from the input data).
[Math. 1]

$$WJ(new) = Kw \cdot p + (1 - Kw) \cdot WJ(old) \qquad (Equation\ 1)$$

Here, Kw is a learning rate parameter ($0 < Kw < 1$), and is a value for determining a degree to which the input vector is reflected in the new weight coefficient. Arithmetic equations (equation 1) and (equation 2) to (equation 12) described later are incorporated in the ART module 410.

Features of a data classification algorithm of the ART module 410 are in the above-described (processing 4). In the (processing 4), when input data different from a pattern during the learning is input, a new pattern can be recorded without changing the recorded pattern. Therefore, a new pattern can be recorded while the pattern learned in the past is recorded.

In this manner, the ART module 410 learns a given pattern when previously given operation data is given as input data. Therefore, when new input data is input to the learned ART module 410, which pattern in the past is closer to the new input data can be determined by the above-described algorithm. A pattern that has not been experienced in the past is classified into a new cluster.

FIG. 4(B) is a diagram showing an example of a configuration of the F0 layer 411. In the F0 layer 411, input data Ii is normalized again at each time point, and a normalized input vector $u_i^0$ to be input to the F1 layer 412 and the selection subsystem 415 is created.

First, $W_i^0$ is calculated from the input data Ii according to the (equation 2). Here, a is a constant.
[Math. 2]

$$w_i^0 = I_i + au_i^0 \qquad (Equation\ 2)$$

Next, $Xi^0$ obtained by normalizing $W_i^0$ is calculated using the (equation 3). Here, $||W^0||$ represents a norm of $W^0$.
[Math. 3]

$$x_i^0 = \frac{w_i^0}{||w^0||} \qquad (Equation\ 3)$$

Then, $V_i^0$ for removing noise from $X_i^0$ is calculated using the (equation 4). Here, $\theta$ is a constant for removing noise. The noise of the input data is removed since a minute value is "0" by calculation of the (equation 4).
[Math. 4]

$$v_i^0 = f(x_i^0) = \begin{cases} x_i^0, & \text{if } x_i^0 \geq \theta \\ 0, & \text{otherwise} \end{cases} \qquad (Equation\ 4)$$

Finally, the normalized input vector $u_i^0$ is obtained using the (equation 5). The $u_i^0$ is an input of the F1 layer 412.

[Math. 5]

$$u_i^0 = \frac{v_i^0}{\|v^0\|} \qquad \text{(Equation 5)}$$

FIG. 4(C) is a diagram showing an example of a configuration of the F1 layer 412. In the F1 layer 412, the $u_i^0$ obtained in the (equation 5) is held as a short-term memory, and $P_i$ to be input to the F2 layer 413 is calculated. The formulas of the F1 layer 412 are summarized and shown in (equation 6) to (equation 12). Here, a and b are constants, f is a function represented by the (equation 4), $T_j$ is a matching degree calculated in the F2 layer 413, and $z_j^i$ is a weight coefficient for the input data Ii of the cluster number j.

[Math. 6]

$$w_i = u_i^0 + au_i \qquad \text{(Equation 6)}$$

[Math. 7]

$$x_i = \frac{w_i}{\|w\|} \qquad \text{(Equation 7)}$$

[Math. 8]

$$v_i = f(x_i) + bf(q_i) \qquad \text{(Equation 8)}$$

[Math. 9]

$$u_i = \frac{v_i}{\|v\|} \qquad \text{(Equation 9)}$$

[Math. 10]

$$q_i = \frac{P_i}{\|p\|} \qquad \text{(Equation 10)}$$

[Math. 11]

$$P_i = u_i + \sum_j^M g(y_i)z_{ji} \qquad \text{(Equation 11)}$$

Here, g is as follows.
[Math. 12]

$$g(y_i) = \begin{cases} d, & \text{if } T_j = \max(T_j) \\ 0, & \text{otherwise} \end{cases} \qquad \text{(Equation 12)}$$

FIG. 5 shows diagrams showing an example of the data classification result in the clustering unit 230 and an abnormality degree calculation method in the diagnosis unit 240.

FIG. 5(A) shows an example of the classification result obtained by classifying the operation data into clusters. In FIG. 5(A), for example, two items of the operation data are shown, and are represented by a two-dimensional graph.

The vertical axis and the horizontal axis indicate the operation data of the respective items in a standardized manner.

The operation data is divided into a plurality of clusters 500 (circles shown in FIG. 5(A)) by the ART module 410. One circle corresponds to one cluster.

In the example of FIG. 5(A), the operation data is classified into four clusters. A cluster 500A with a cluster number "1" is a cluster in which a value of the item A is relatively large and a value of the item B is relatively small. A cluster 500B with a cluster number "2" is a cluster in which both the values of the item A and the item B are relatively small. A cluster 500C with a cluster number "3" is a cluster in which the value of the item A is relatively small and the value of the item B is relatively large. A cluster 500D with a cluster number "4" is a cluster in which both the values of the item A and the item B are relatively large.

FIG. 5(B) is a diagram showing an example of a result of classifying the operation data into clusters and an example of the operation data. The horizontal axis represents time, and the vertical axis represents operation data (measurement signal) or cluster number. As shown in FIG. 5 (B), the operation data is classified into clusters with cluster numbers "1" to "4".

In the example of FIG. 5(B), in a learning period, clusters with cluster numbers "1" to "3" are generated. Therefore, when the operation data is not classified into the clusters with the cluster numbers "1" to "3" in a diagnosis period, the cluster with the cluster number "4" (new state not experienced when being in a normal state) is generated. As a result, in step S17 of FIG. 3, an occurrence of the abnormality in the plant 100 (occurrence of abnormality) can be determined based on the cluster number.

An example of the abnormality degree calculation method in the diagnosis unit 240 will be described with reference to FIG. 5(C). When operation data 501 is classified into a new cluster (cluster with the cluster number "4" in the example), the diagnosis unit 240 calculates, as the abnormality degree, a distance 503 between the operation data 501 and a center of gravity 502 of a closest normal cluster. By calculating the abnormality degree, how much the operation data 501 deviates from the normal cluster can be evaluated.

FIG. 6 is a diagram showing an example of a processing procedure related to the attribute automatic change processing executed by the cluster attribute setting unit 251. The attribute automatic change processing is operated in step S14 of FIG. 3. A plurality of attribute change methods are implemented in the cluster attribute setting unit 251, and a user can select an attribute change method to be used as an option.

In step S20, the cluster attribute setting unit 251 determines whether to use a first attribute change option. When the cluster attribute setting unit 251 determines that the first attribute change option is to be used, the processing proceeds to step S21, and when the cluster attribute setting unit 251 determines that the first attribute change option is not to be used, the processing proceeds to step S22.

In step S21, as an attribute change method for the first attribute change option, the cluster attribute setting unit 251 sets, as normal clusters, clusters occurring (generated) when processing the operation data from a present time to a predetermined certain period (an example of the predetermined period), and sets clusters other than the normal clusters as abnormal clusters. More specifically, the cluster attribute setting unit 251 changes a value of the attribute (attribute value) of the table shown in FIG. 2(B) . For example, when the operation data of the cluster with the cluster number "1" does not occur in the predetermined period in the table shown in FIG. 2(B), the attribute value is changed from "normal" to "abnormal".

Although the period from a present time to a predetermined certain period is described as an example of the predetermined period, the invention is not limited thereto, and other periods may be adopted, for example, a period after the periodic inspection to a certain period. In addition, the event of the table shown in FIG. 2(B) may be configured to be updated automatically, may be configured to be updated manually, or may be configured to be updated automatically and manually.

In step S22, the cluster attribute setting unit 251 determines whether to use a second attribute change option. When the cluster attribute setting unit 251 determines that the second attribute change option is to be used, the processing proceeds to step S23, and when the cluster attribute setting unit 251 determines that the second attribute change option is not to be used, the attribute automatic change processing is ended.

In step S23, the cluster attribute setting unit 251 extracts information of the machine adjusted by the periodic inspection. For example, the cluster attribute setting unit 251 extracts, as the machine adjusted by the periodic inspection, information of the machine by referring to data such as a written plan or a written result report of the periodic inspection.

In step S24, the cluster attribute setting unit 251 specifies a group related to data to be input to the machine extracted in step S23, and for the group, the cluster attribute setting unit 251 sets, as normal clusters, clusters occurring when processing the operation data in a certain period (an example of the predetermined period) from the periodic inspection, and sets clusters other than the normal clusters as abnormal clusters.

In this manner, a processing amount can be reduced by specifying and processing the group affected by the machine adjusted by the periodic inspection (for example, a group positioned downstream of the group is also included).

According to the attribute automatic change processing, since the normal clusters and the abnormal clusters are reset appropriately, an occurrence of misinformation and false report can be prevented.

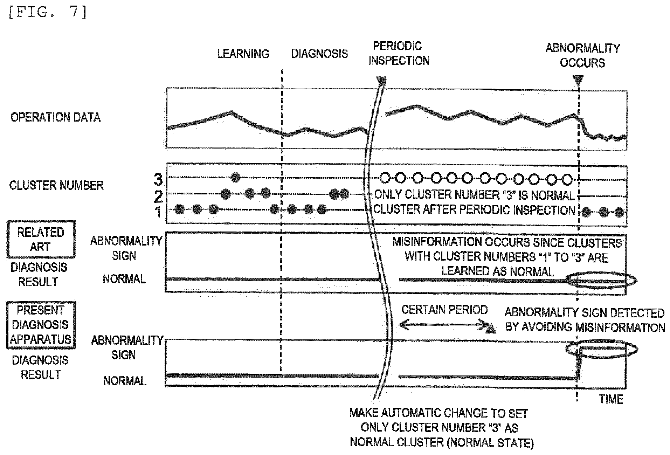

FIG. 7 is a diagram showing an example of a processing content performed by the cluster attribute setting unit 251.

Here, as shown in FIG. 7, the clustering unit 230 processes the operation data (learning data) in the learning period, and clusters with cluster numbers "1" to "3" are generated as normal clusters. After the periodic inspection the characteristics of the plant change and only the cluster with the cluster number "3" is generated. After the periodic inspection, only the cluster with the cluster number "3" is considered to be a normal cluster.

Then, when an abnormality occurs and the operation data is classified into the cluster with the cluster number "1", in a method in the related art, the occurrence of the abnormality cannot be detected and misinformation occurs since the clusters with the cluster numbers "1" to "3" are learned as normal. However, in the diagnosis apparatus 200, the cluster attribute setting unit 251 is operated to perform diagnosis, whereby an automatic change is made to set only the cluster with the cluster number "3" as a normal cluster (normal state), and the abnormality (abnormality sign) can be detected by avoiding the misinformation.

In this manner, the abnormality can be detected by using the diagnosis apparatus 200 in a case where a range learned as normal in the past is abnormal at present when the characteristics of the plant change due to aging, periodic inspection, and the like.

FIG. 8 is a diagram showing an example of a processing procedure related to the attribute change post-processing executed by the cluster attribute change post-processing unit 252. The attribute change post-processing is executed as a post-processing after the cluster attribute setting unit 251 is operated in step S14 in FIG. 3. A plurality of post-processing methods are implemented in the cluster attribute change post-processing unit 252, and the user can select a post-processing method to be used as an option.

In step S30, the cluster attribute change post-processing unit 252 determines whether to use a first post-processing option. When the cluster attribute change post-processing unit 252 determines that the first post-processing option is to be used, the processing proceeds to step S31, and when the cluster attribute change post-processing unit 252 determines that the first post-processing option is not to be used, the processing proceeds to step S32.

In step S31, the cluster attribute change post-processing unit 252 recalculates the abnormality degree that is the distance between the operation data and the normal clusters for the past operation data. The abnormality degree calculation method is similar as the calculation method in the diagnosis unit 240, and a description thereof will be omitted. A result of the recalculation will be described later with reference to FIG. 10.

In step S32, the cluster attribute change post-processing unit 252 determines whether to use a second post-processing option. When the cluster attribute change post-processing unit 252 determines that the second post-processing option is to be used, the processing proceeds to step S33, and when the cluster attribute change post-processing unit 252 determines that the second post-processing option is not to be used, the processing proceeds to step S34.

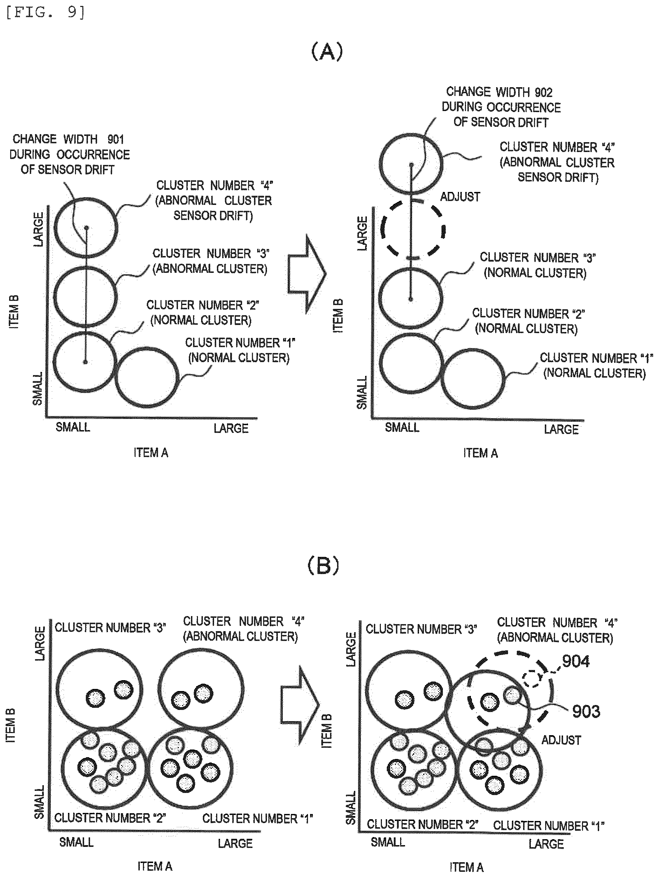

In step S33, the cluster attribute change post-processing unit 252 adjusts the weight coefficient of the cluster associated with an event. The cluster attribute change post-processing unit 252 adjusts a change width of a normal cluster to match a change width of the operation data when the abnormality occurs in the past, and a specific adjustment method will be described later with reference to FIG. 9(A).

In step S34, the cluster attribute change post-processing unit 252 determines whether to use a third post-processing option, when it is determined that the third post-processing option is to be used, the processing proceeds to step S35, and when it is determined that the third post-processing option is not to be used, the attribute change post-processing is ended.

In step S35, the cluster attribute change post-processing unit 252 adjusts the weight coefficient in consideration of a boundary between the cluster with an attribute changed to be normal and the cluster with an abnormal attribute. The cluster attribute change post-processing unit 252 calculates a distance between the operation data belonging to the cluster changed to a normal cluster and a closest existing normal cluster, and adjusts the weight coefficient of the cluster such that the operation data having a maximum distance becomes a boundary between normal clusters and abnormal clusters, and a specific adjustment method will be described later with reference to FIG. 9(B).

According to the attribute change post-processing, since the abnormality degree is recalculated, data in the past can be grasped appropriately. In addition, according to the attribute change post-processing, since the weight coefficient is adjusted to define the cluster more appropriately, the abnormality in the plant 100 can be detected more accurately.

FIG. 9 shows diagrams showing an example of a result of adjusting the weight coefficient of the cluster by the operation of the cluster attribute change post-processing unit 252. An adjustment content of the weight coefficient in step S33 is shown in FIG. 9(A), and an adjustment content of the weight coefficient in step S35 is shown in FIG. 9(B).

In FIG. 9(A), clusters with the cluster numbers "1" and "2" are normal clusters, clusters with the cluster numbers "3" and "4" are abnormal clusters, and in the cluster with the cluster number "4", a sensor drift abnormality (state of the sensor gets worse and a certain value is increased) is associated as an event (see a left diagram in FIG. 9(A)). From the state, when the cluster with the cluster number "3" is changed to a normal cluster, the weight coefficient of the cluster number "4" is adjusted such that a change width 902 of the closest normal cluster (in the example, the cluster with the cluster number "3") becomes a change width 901 of the operation data during occurrence of the sensor drift (see a right diagram in FIG. 9(A)).

In other words, when a first cluster (cluster with the cluster number "4") is added to the existing clusters (clusters with the cluster numbers "1", "2" and "3") due to the drift abnormality in which the value of the operation data is increased, and an attribute of a second cluster (cluster number "3") before the drift abnormality corresponding to the first cluster is changed to be normal by the cluster attribute setting unit 251, the cluster attribute change post-processing unit 252 adjusts the weight coefficient of the first cluster, indicating a center of the first cluster, such that the change width (change width 901) in a third cluster (cluster with the cluster number "2") with a normal attribute before the drift abnormality corresponding to the first cluster and the second cluster is equal to the change width (change width 902) between a cluster after the adjustment of the weight coefficient and the second cluster.

In this manner, the abnormality in the plant 100 can be diagnosed appropriately by taking the drift abnormality into account by adjusting the weight coefficient of the cluster.

In FIG. 9 (B), the clusters with the cluster numbers "1", "2" and "3" are normal clusters, and the cluster with the cluster number "4" is an abnormal cluster (see the left diagram in FIG. 9(B)). From the state, when the cluster with the cluster number "4" is changed to a normal cluster by the cluster attribute setting unit 251, the cluster attribute change post-processing unit 252 calculates a distance between each data belonging to the normal clusters and the closest existing normal cluster, and adjusts the weight coefficient of the cluster such that data (data 903 in the example) having a maximum distance is set as the boundary between normal clusters and abnormal clusters (see the right diagram of FIG. 9(B)).

In this manner, by adjusting the weight coefficient of the cluster, it is possible to avoid a situation where suspicious data with a possibility to be normal (data 904 determined to be abnormal until now) is identified as normal when the number of data belonging to the cluster number "4" is small.

FIG. 10 is a diagram showing an example of a result of recalculating the abnormality degree (screen for confirming the processing result of the cluster attribute change post-processing unit 252) by the operation of the cluster attribute change post-processing unit 252.

FIG. 10 shows the result of the cluster attribute change post-processing unit 252 recalculating the abnormality degree by using the first post-processing option after the cluster with the cluster number "2" is changed from an abnormal cluster to a normal cluster.

The calculation result of the abnormality degree is corrected, and the abnormality degree corresponding to the cluster with an attribute changed to be normal decreases. That is, when referring to data in the past, the abnormality degree of the normal cluster increases, and the abnormality degree of the abnormal cluster decreases.

Both a diagnosis result before the attribute change and a diagnosis result after the attribute change may be displayed on the display device 320, or one of the diagnosis results may be displayed on the display device 320.

As described above, according to the diagnosis apparatus 200, the time for processing the learning data and generating a normal cluster each time a diagnosis is performed is unnecessary, and the occurrence of the misinformation can be prevented.

(2) Other Embodiments

Although a case where the invention is applied to the diagnosis apparatus 200 is described in the embodiment described above, the invention is not limited thereto, and the diagnosis apparatus 200 can be widely applied to various other diagnosis apparatuses and diagnosis methods.

Although various types of data are described using XX table and XXDB in the above embodiment, the data structure is not limited and the data may be represented as XX information and the like.

In the above description, information such as a program, a table, and a file for implementing functions can be stored in a memory or a storage device such as a hard disk or a solid state drive (SSD), or can be stored in a recording medium such as an IC card, an SD card, or a DVD.

The configuration described above may be modified, rearranged, combined, or omitted as appropriate without departing from the scope of the invention.

Reference Sign List

1        diagnosis system
100    plant
200    diagnosis apparatus
210    external input interface unit

220    external output interface unit
230    clustering unit
240    diagnosis unit
250    calculation result correction unit
251    cluster attribute setting unit
252    cluster attribute change post-processing unit
260    operation data DB
270    calculation result DB
300    external apparatus

**Claims**

1. A diagnosis apparatus configured to diagnose an abnormality in a facility based on operation data of the facility, the diagnosis apparatus comprising:

   a clustering unit configured to determine whether the operation data of the facility can be classified into an existing cluster, and when it is determined that the operation data cannot be classified, add a cluster with an abnormal attribute to the existing cluster;
   a diagnosis unit configured to diagnose an abnormality in the facility based on a processing result of the clustering unit; and
   a cluster attribute setting unit configured to set an attribute of the existing cluster based on the operation data of the facility in a predetermined period.

2. The diagnosis apparatus according to claim 1, wherein
   for the existing clusters, the cluster attribute setting unit sets as normal an attribute of a cluster into which the operation data of the facility is classified in the predetermined period, and sets as abnormal an attribute of a cluster other than the cluster set as normal.

3. The diagnosis apparatus according to claim 1, wherein
   an existing cluster is provided for each group of data input to each machine constituting the facility, and
   the cluster attribute setting unit sets, based on the operation data of the facility from a periodic inspection to a certain period or from a present time to a certain period, an attribute of an existing cluster in a group related to data input to a machine adjusted by the periodic inspection.

4. The diagnosis apparatus according to claim 1, further comprising:
   a cluster attribute change post-processing unit configured to recalculate an abnormality degree that is a distance between the operation data and the cluster with a normal attribute for past operation data when the attribute of the existing cluster is changed by the cluster attribute setting unit.

5. The diagnosis apparatus according to claim 1, further comprising:
   a cluster attribute change post-processing unit configured to adjust, when a first cluster is added to the existing cluster due to drift abnormality in which a value of the operation data is increased and an attribute of a second cluster before the drift abnormality corresponding to the first cluster is changed to normal by the cluster attribute setting unit, a weight coefficient indicating a center of the first cluster such that a change width in a third cluster with a normal attribute before the drift abnormality corresponding to the first cluster and the second cluster is equal to a change width between a cluster after adjustment of the weight coefficient and the second cluster.

6. The diagnosis apparatus according to claim 1, further comprising:
   a cluster attribute change post-processing unit configured to calculate a distance between each of a plurality of pieces of operation data belonging to a cluster with an attribute changed to be normal by the cluster attribute setting unit and a closest cluster with a normal attribute among the existing cluster, and adjust a weight coefficient indicating a center of the cluster with the attribute changed to be normal such that operation data having a maximum distance among the plurality of pieces of operation data is positioned at a boundary between normal clusters and abnormal clusters.

7. The diagnosis apparatus according to claim 1, further comprising:
   an external output interface unit configured to output screen information related to a screen for confirming an attribute change result for the cluster by the cluster attribute setting unit.

8. The diagnosis apparatus according to any one of claims 4 to 6, comprising:
an external output interface unit configured to output screen information related to a screen for confirming a processing result of the cluster attribute change post-processing unit.

9. A diagnosis method for diagnosing an abnormality in a facility based on operation data of the facility, the diagnosis method comprising:

a first step of determining, by a clustering unit, whether the operation data of the facility can be classified into an existing cluster, and when it is determined that the operation data cannot be classified, adding a cluster with an abnormal attribute to the existing cluster;
a second step of diagnosing, by a diagnosis unit, an abnormality in the facility based on a processing result of the clustering unit; and
a third step of setting, by a cluster attribute setting unit, an attribute of the existing cluster based on the operation data of the facility in a predetermined period.

[FIG. 1]

[FIG. 2]

## (A)

| TIME POINT | ITEM A | ITEM B | ITEM C | . . . |
|---|---|---|---|---|
| 0:00 | 10 | 15 | 20 | . . . |
| 0:01 | 11 | 15 | 20 | . . . |
| 0:02 | 10 | 16 | 19 | . . . |
| 0:03 | 10 | 15 | 18 | . . . |
| ⋮ | ⋮ | ⋮ | ⋮ | ⋮ |

## (B)

| CLUSTER NUMBER | ATTRIBUTE | EVENT | WEIGHT COEFFICIENT | | |
|---|---|---|---|---|---|
| | | | ITEM A | ITEM B | . . . |
| 1 | NORMAL | | 10 | 15 | . . . |
| 2 | NORMAL | | 11 | 16 | . . . |
| 3 | ABNORMAL | ABRASION | 18 | 8 | . . . |
| ⋮ | ⋮ | | ⋮ | ⋮ | ⋮ |

## (C)

| TIME POINT | CLUSTER NUMBER | . . . |
|---|---|---|
| 0:00 | 1 | . . . |
| 0:01 | 1 | . . . |
| 0:02 | 2 | . . . |
| 0:03 | 3 | . . . |
| ⋮ | ⋮ | ⋮ |

15

[FIG. 3]

```
                        ┌──────────────────┐
                        │      START       │
                        └──────────────────┘
                                 │
          ┌──────────────────────●──────────────────────────────┐
          │                      │                               │
          │          ┌──────────────────────┐ S10               │
          │          │ COLLECT OPERATION DATA│                   │
          │          └──────────────────────┘                   │
          │                      │                               │
          │                      │    S11      LEARNING MODE     │         S12
          │                 ◇─────────────◇──────────────┌────────────────────────┐
          │                 │OPERATION MODE?│            │  PROCESS LEARNING DATA  │
          │                 ◇─────────────◇              └────────────────────────┘
          │                      │
          │              DIAGNOSIS MODE
          │                      │           S13        UNNECESSARY
          │              ◇──────────────────◇──────────────┐
          │              │   CALCULATION      │             │
          │              │RESULT CORRECTION IS │            │
          │              │   NECESSARY?        │            │
          │              ◇──────────────────◇              │
          │                      │                          │
          │                 NECESSARY        S14            │
          │          ┌──────────────────────┐              │
          │          │PERFORM CALCULATION RESULT│           │
          │          │ CORRECTION PROCESSING  │             │
          │          └──────────────────────┘              │
          │                      │           S15            │
          │          ┌──────────────────────┐              │
          │          │    OUTPUT RESULT      │              │
          │          └──────────────────────┘              │
          │                      │                          │
          │                      ●◄─────────────────────────┘
          │                      │           S16
          │          ┌──────────────────────┐
          │          │ PROCESS OPERATION DATA│
          │          └──────────────────────┘
          │                      │           S17        NO
          │              ◇──────────────────◇──────────────┐
          │              │ DETECT ABNORMALITY?│            │
          │              ◇──────────────────◇              │
          │                      │                          │
          │                     YES           S18           │
          │          ┌──────────────────────┐              │
          │          │    DISPLAY SCREEN     │              │
          │          └──────────────────────┘              │
          │                      │                          │
          │                      ●◄─────────────────────────┘
          │          NO          │           S19
          └──────────────◇──────────────────◇
                         │       END?         │
                         ◇──────────────────◇
                              │
                             YES
                         ┌──────────────────┐
                         │       END        │
                         └──────────────────┘
```

[FIG. 4]

(A)

CATEGORY

410

F2 LAYER — 413

415

SELECTION SUBSYSTEM

414

MEMORY

F1 LAYER — 412

411

F0 LAYER — 411

INPUT DATA

(B)

$u^0$

411

$u^0$ ← $v^0$

$w^0$ → $x^0$

I

(C)

p T,z

412

p → q

u ← v

w → x

$u^0$

[FIG. 5]

(A)

CLUSTER NUMBER "3"

500C

500

500D

CLUSTER NUMBER "4"

500A

CLUSTER NUMBER "1"

CLUSTER NUMBER "2" 500B

ITEM B

LARGE

SMALL

SMALL                    LARGE

ITEM A

(B)

LEARNING                                    DIAGNOSIS

ITEM A

OPERATION
DATA

ITEM B

4
CLUSTER 3
NUMBER 2
1

TIME

(C)

CLUSTER NUMBER "3"

500C

500

500D

501

CLUSTER NUMBER "4"

ABNORMALITY DEGREE 503

502  500A

CENTER OF
GRAVITY

CLUSTER NUMBER "1"

CLUSTER NUMBER "2"  500B

ITEM B

LARGE

SMALL

SMALL                    LARGE

ITEM A

[FIG. 6]

START

S20
FIRST ATTRIBUTE
CHANGE OPTION?

YES

S21
SET CLUSTERS OCCURRING FROM
PRESENT TIME TO CERTAIN PERIOD
AS NORMAL CLUSTERS

NO

S22
SECOND ATTRIBUTE
CHANGE OPTION?

YES

S23
EXTRACT MACHINE ADJUSTED BY
PERIODIC INSPECTION

NO

S24
CHANGE TO SET CLUSTERS OCCURRING
WHEN PROCESSING DATA IN CERTAIN
PERIOD FROM PERIODIC INSPECTION AS
NORMAL CLUSTERS

END

[FIG. 7]

[FIG. 8]

```
                    ┌─────────────────┐
                    │      START      │
                    └────────┬────────┘
                             │
                             ▼         S30                    S31
                    ╱─────────────────╲          ┌──────────────────────────┐
                   ╱  FIRST POST-       ╲   YES   │                          │
                  ╱   PROCESSING         ╲───────▶│    RE-CLUSTER PAST DATA   │
                   ╲   OPTION?           ╱        │                          │
                    ╲─────────────────╱          └───────────┬──────────────┘
                             │                                │
                            NO                                │
                             ▼                                │
                             ●◀───────────────────────────────┘
                             │
                             ▼         S32                    S33
                    ╱─────────────────╲          ┌──────────────────────────┐
                   ╱  SECOND POST-      ╲   YES   │  ADJUST WEIGHT COEFFICIENT│
                  ╱   PROCESSING         ╲───────▶│  OF CLUSTER ASSOCIATED    │
                   ╲   OPTION?           ╱        │  WITH EVENT               │
                    ╲─────────────────╱          └───────────┬──────────────┘
                             │                                │
                            NO                                │
                             ▼                                │
                             ●◀───────────────────────────────┘
                             │
                             ▼         S34                    S35
                    ╱─────────────────╲          ┌──────────────────────────┐
                   ╱  THIRD POST-       ╲   YES   │ ADJUST WEIGHT COEFFICIENT │
                  ╱   PROCESSING         ╲───────▶│ IN CONSIDERATION OF       │
                   ╲   OPTION?           ╱        │ BOUNDARY BETWEEN CLUSTER  │
                    ╲─────────────────╱          │ WITH ATTRIBUTE CHANGED TO │
                             │                   │ BE NORMAL AND CLUSTER WITH│
                            NO                    │ ABNORMAL ATTRIBUTE        │
                             ▼                    └───────────┬──────────────┘
                             ●◀───────────────────────────────┘
                             │
                             ▼
                    ┌─────────────────┐
                    │       END       │
                    └─────────────────┘
```

[FIG. 9]

(A)

CHANGE WIDTH 901
DURING OCCURRENCE
OF SENSOR DRIFT

CLUSTER NUMBER "4"
(ABNORMAL CLUSTER
SENSOR DRIFT)

CLUSTER NUMBER "3"
(ABNORMAL CLUSTER)

CLUSTER NUMBER "2"
(NORMAL CLUSTER)

CLUSTER NUMBER "1"
(NORMAL CLUSTER)

ITEM B
LARGE
SMALL

SMALL        LARGE
ITEM A

CHANGE WIDTH 902
DURING OCCURRENCE
OF SENSOR DRIFT

CLUSTER NUMBER "4"
(ABNORMAL CLUSTER
SENSOR DRIFT)

ADJUST

CLUSTER NUMBER "3"
(NORMAL CLUSTER)

CLUSTER NUMBER "2"
(NORMAL CLUSTER)

CLUSTER NUMBER "1"
(NORMAL CLUSTER)

ITEM B
LARGE
SMALL

SMALL        LARGE
ITEM A

(B)

CLUSTER NUMBER "3"

CLUSTER NUMBER "4"
(ABNORMAL CLUSTER)

CLUSTER NUMBER "2"        CLUSTER NUMBER "1"

ITEM B
LARGE
SMALL

SMALL        LARGE
ITEM A

CLUSTER NUMBER "3"

CLUSTER NUMBER "4"
(ABNORMAL CLUSTER)

904

903

ADJUST

CLUSTER NUMBER "2"        CLUSTER NUMBER "1"

ITEM B
LARGE
SMALL

SMALL        LARGE
ITEM A

[FIG. 10]

## INTERNATIONAL SEARCH REPORT

International application No.

PCT/JP2018/044793

### A. CLASSIFICATION OF SUBJECT MATTER
Int.Cl. G05B23/02(2006.01)i

According to International Patent Classification (IPC) or to both national classification and IPC

### B. FIELDS SEARCHED

Minimum documentation searched (classification system followed by classification symbols)
Int.Cl. G05B23/02

Documentation searched other than minimum documentation to the extent that such documents are included in the fields searched
| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2015-162140 A (HITACHI, LTD.) 07 September 2015, paragraphs [0018]-[0116], fig. 1-7 (Family: none) | 1-9 |
| Y | US 2007/0088550 A1 (FILEV, D.) 19 April 2007, paragraphs [0013], [0048], [0054], [0058], [0059], [0067], [0068], fig. 1, 3, 4 & DE 102006048430 A1 | 1-9 |
| A | JP 2016-33778 A (HITACHI POWER SOLUTIONS CO., LTD.) 10 March 2016, abstract, claim 1, fig. 1-21 (Family: none) | 1-9 |

☒  Further documents are listed in the continuation of Box C.　　☐  See patent family annex.

| | |
|---|---|
| *　　Special categories of cited documents: | "T"　later document published after the international filing date or priority date and not in conflict with the application but cited to understand the principle or theory underlying the invention |
| "A"　document defining the general state of the art which is not considered to be of particular relevance | |
| "E"　earlier application or patent but published on or after the international filing date | "X"　document of particular relevance; the claimed invention cannot be considered novel or cannot be considered to involve an inventive step when the document is taken alone |
| "L"　document which may throw doubts on priority claim(s) or which is cited to establish the publication date of another citation or other special reason (as specified) | "Y"　document of particular relevance; the claimed invention cannot be considered to involve an inventive step when the document is combined with one or more other such documents, such combination being obvious to a person skilled in the art |
| "O"　document referring to an oral disclosure, use, exhibition or other means | |
| "P"　document published prior to the international filing date but later than the priority date claimed | "&"　document member of the same patent family |

| Date of the actual completion of the international search | Date of mailing of the international search report |
|---|---|
| 07.02.2019 | 19.02.2019 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2018/044793

C (Continuation).    DOCUMENTS CONSIDERED TO BE RELEVANT

| Category* | Citation of document, with indication, where appropriate, of the relevant passages | Relevant to claim No. |
|---|---|---|
| A | WO 2017/022784 A1 (HITACHI POWER SOLUTIONS CO., LTD.) 09 February 2017, paragraph [0073] & US 2018/0239345 A1, paragraph [0114] & EP 3333661 A1 | 1-9 |
| A | JP 2015-18389 A (HITACHI POWER SOLUTIONS CO., LTD.) 29 January 2015, entire text, all drawings (Family: none) | 1-9 |
| A | JP 2010-237893 A (HITACHI, LTD.) 21 October 2010, entire text, all drawings (Family: none) | 1-9 |

Form PCT/ISA/210 (continuation of second sheet) (January 2015)

**EP 3 761 133 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010237893 A

- JP 2015018389 A